# EUROPÄISCHE PATENTSCHRIFT

(11) **EP 3 526 062 B1**
(45) Veröffentlichungstag und Bekanntmachung des Hinweises auf die Patenterteilung: **02.12.2020**
(21) Anmeldenummer: 18796580.1
(22) Anmeldetag: 01.10.2018
(51) Int. Cl.: B60C 25/14

(54) **REIFENBEFÜLLVORRICHTUNG UND REIFENBEFÜLLVERFAHREN SOWIE VERWENDUNG VON UNTERDRUCK BEIM REIFENMONTIEREN**
TIRE INFLATION DEVICE AND TIRE INFLATION METHOD, AND USE OF VACUUM FOR THE MOUNTING OF A TIRE
DISPOSITIF DE REMPLISSAGE DE PNEU ET PROCÉDÉ DE REMPLISSAGE DE PNEU, ET UTILISATION D'UN VACUUM POUR LE MONTAGE DE PNEU

(30) Priorität: 22.12.2017 DE 102017012008
(43) Veröffentlichungstag der Anmeldung: 21.08.2019
(73) Patentinhaber: Matheus, Georg, 73035 Göppingen (DE)
(72) Erfinder: Matheus, Georg, 73035 Göppingen (DE)
(74) Vertreter: Westphal, Mussgnug & Partner Patentanwälte mbB
(86) Internationale Anmeldenummer: PCT/DE2018/000277
(87) Internationale Veröffentlichungsnummer: WO 2019/120346

(56) Entgegenhaltungen:
- DE-A1- 2 118 005
- US-A- 4 699 185

## Beschreibung

Die Erfindung betrifft eine Reifenbefüllvorrichtung sowie ein Reifenbefüllverfahren, wie beispielsweise aus EP 2 792 511 B1 bekannt.

Einer bekannten Reifenbefüllvorrichtung ist demnach ein aus einer Radfelge und einem auf die Radfelge montierten schlauchlosen Reifen bestehendes Rad zuführbar.

Beim Befüllen von Hand wird konventionell ein Druckluftstoß durch einen Ventilsitz in ein Reifeninneres verabreicht, um den Reifen dicht, nämlich seine Reifenflanken auf beiden Seiten umlaufend, an die Radfelge in Anlage zu bringen. Das funktioniert einigermaßen prozesssicher. Der Monteur hämmert mitunter dennoch auf den Reifen ein oder verdreht ihn und versuchte es erneut usw.

Automatisierungen gelingen bisher mit einer auf den oben angedienten Reifenrand nach Zentrierung passend auf diese obere Reifenflanke aufzusetzende Reifenfüllglocke und mit einer Dichteinrichtung zur Abdichtung des Füllraums. Die bekannte Reifenfüllglocke ist aus einer längs der Drehachse des Rades bewegbaren Füllplatte und einem separaten Füllring zusammengesetzt, der aus mehreren gegeneinander auswechselbaren Füllringen unterschiedlichen Durchmessers auswählbar und in eine zur Drehachse zentrischen Lage bewegbar ist. Der in zentrischer Lage angeordnete Füllring ist mit einem ersten Rand an die Füllplatte anlegbar und gemeinsam mit dieser bewegbar. Ein der Füllplatte abgekehrter zweiter Rand des in zentrischer Lage angeordneten Füllrings ist gegen eine Reifenflanke anlegbar.

Bei einer solchen automatischen Serienfertigung werden Kraftfahrzeugräder mit schlauchlosen Reifen demnach in einer in die Montagelinie integrierten automatischen Reifenfüllstation mit Druckluft befüllt. Die Felge mit montiertem Reifen wird hierbei auf eine geeignete Unterlageplatte gelegt, die das Rad beim Füllvorgang nach unten hin abdichtet. Auf die Reifenflanke der Reifenoberseite wird eine Füllglocke aufgesetzt, die den Reifen und die Felge nach oben hin abdichtet. Die Reifenseitenwand wird beim Befüllvorgang so weit nach unten gedrückt, dass zwischen Reifenwulst und Felge ein Ringspalt entsteht, durch den die in die Füllglocke geleitete Druckluft in den Reifen einströmen kann. Durch die eingeströmte Druckluft wird der Reifen mit Kraft gegen die Auflageplatte und die Füllglocke gepresst. Ist der Fülldruck erreicht, so wird die Füllglocke angehoben. Dadurch bewegen sich die Reifenseitenwände in axialer Richtung auseinander, bis die Reifenwulste ihre jeweilige Sitzposition auf der Felge eingenommen haben. Solch ein Verfahren ist beispielsweise aus der DE 41 01 304 A1 oder der DE 198 01 455 A1 bekannt. Als weiterer Stand der Technik wird die US 4 699 185 A genannt.

Für einen solchen Füllvorgang muss die Füllglocke eine Öffnung haben, deren Durchmesser einerseits groß genug ist, damit die Füllglocke nicht an die Felge anstößt, sondern über die Felge gestülpt werden kann. Der Durchmesser der Öffnung darf andererseits aber nicht so groß sein, dass die Füllglocke die obere Reifenseitenwand radial außerhalb ihres Hochpunktes kontaktiert. Die Füllglocke würde nämlich dann die Radialbewegung des Reifens behindern, was dazu führen könnte, dass der Reifenwulst nicht richtig in seinen Sitz springt. Eine Füllglocke eignet sich somit nur für einen begrenzten Größenbereich von Kraftfahrzeugrädern.

Eine automatisierte Reifenbefüllung bleibt bisher ein zu verbesserndes Problem.

Die Aufgabe wird nach der Erfindung durch eine Reifenbefüllvorrichtung mit den in Anspruch 1, durch ein Befüllverfahren mit den in Anspruch 8 und durch eine Verwendung mit den in Anspruch 12 angegebenen Merkmalen gelöst. Außerdem ist es ganz grundsätzlicher Lösungsbestandteil, dass durch eine Glocke hindurch, ob die Glocke im Überdruck auf einen Reifen aufgesetzt funktioniert oder im Unterdruck um den Reifen herum angeordnet als Reifenmontagemittel dient. Nicht erfindungsrelevant wäre auch möglich. dass ein durch die Überdruck- oder Unterdruckglocke hindurch geführter und an ein Reifenventil 22 angeschlossener Befüllschlauch beim automatisierten Reifenmontieren verwendet wird.

Vorteilhafte Ausgestaltungen der Reifenbefüllvorrichtung, des -verfahrens und der Verwendung von Unterdruck sind in jeweiligen Unteransprüchen sowie den Figuren mit nachfolgender Beschreibung angegeben.

Die Reifenbefüllvorrichtung und das -verfahren gemäß der Erfindung verwenden einen Unterdruck, um zumindest einen Impuls auf die an die Felge anzulegende(n) Reifenwand(-wände) zu geben.

Vorteilhaft ist beispielsweise, dass die immer schmaler werdenden Reifenflanken das Verfahren nicht mehr begrenzen. Schließt man nach einer vorteilhaften Ausführungsform, beispielsweise gemäß der in Anspruch 1 näher beschriebenen erfindungsgemäßen Befüllvorrichtung, eine zumindest teilvakuumierte Kammer berührungslos um den Reifen herum, muss erfindungsgemäß nichteinmal hundertprozentig zentriert ein an sich starres Teil wie eine Glocke auf die "weiche" Reifenflanke gedrückt werden. Ein Erfolg der Erfindung ist es also, dass eine universal verwendbare Reifenbefüllvorrichtung für diverse Reifenarten und -größen prozesssicher funktionieren kann.

Nicht nur beim erfindungsgemäßen Reifenmontieren mit Unterdruck sondern auch beim konventionellen Verwenden von Überdruck zur Reifenmontage wird gemäß einer besonderen Verwendung eines Befüllschlauchs als Nebengewinn eines Teilaspekts des erfindungsgemäßen Verfahrens erreicht, dass ohne weiteren Aufwand ein sofortiges Befüllen auf Nenndruck gelingt. Muss in konventionellen Verfahren bisher trotz Montage mit Überdruck anschließend ein erneutes Radhandling stattfinden und dabei gegebenenfalls erneut das Rad an besonderer Stelle positioniert werden, um erstens einen Nenndruck zu erzeugen und zweitens den Reifenluftdruck und damit den Montageerfolg final zu kontrollieren, kann das gemäß der hier angeregten besonderen Verwendung des Befüllschlauchs schon während der Reifenmontage durch die Glocke hindurch sofort erfolgen.

Die Erfindung wird nachfolgend anhand dreier Ausführungsbeispiele näher erläutert, die in fünf Zeichnungen schematisch dargestellt sind.

Es zeigen
- Figur 1: einen Schnitt durch eine Reifenbefüllvorrichtung nach einem ersten Ausführungsbeispiel der Erfindung,
- Figur 2: eine schematische Ansicht auf eine Vakuumtankanordnung zum Anschluss an die Reifenbefüllvorrichtung gemäß der Figur 1,
- Figur 3: eine Schnittansicht einer weiteren erfindungsgemäßen Reifenbefüllvorrichtung nach einem zweiten Ausführungbeispiel ohne ein Maschinengestell in schematischer Darstellung oberhalb zweier Vakuumtanks,
- Figur 4: eine Schnittansicht einer weiteren erfindungsgemäßen Reifenbefüllvorrichtung nach einem dritten Ausführungsbeispiel ohne Maschinengestell, ebenfalls in schematischer Darstellung, allerdings in vertikaler Anordnung unterhalb eines einzigen Vakuumtanks, welcher Vakuumtank mit darunter angeordneter Vakuumglocke stationär mit dazwischen wirkenden Ventilaktoren angeordnet bleiben, und
- Figur 5: eine Schnittansicht der erfindungsgemäßen Reifenbefüllvorrichtung aus Figur 4 mit einem Maschinengestell und mit weiteren Komponenten einer automatisierten Zuführeinrichtung.

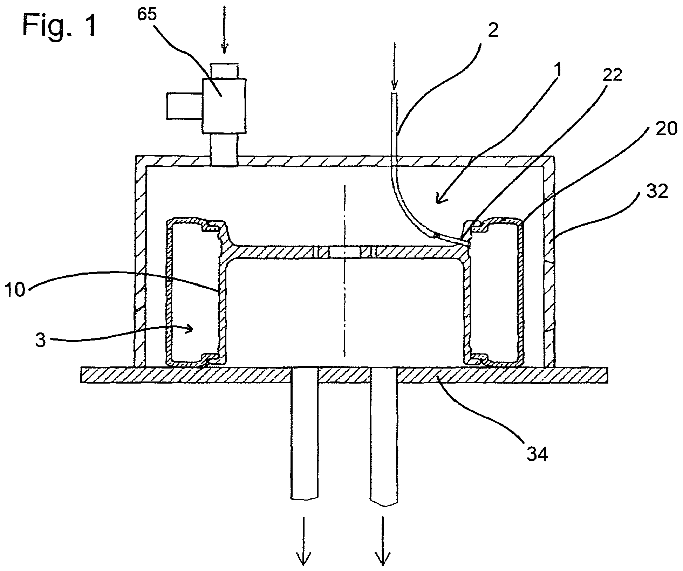

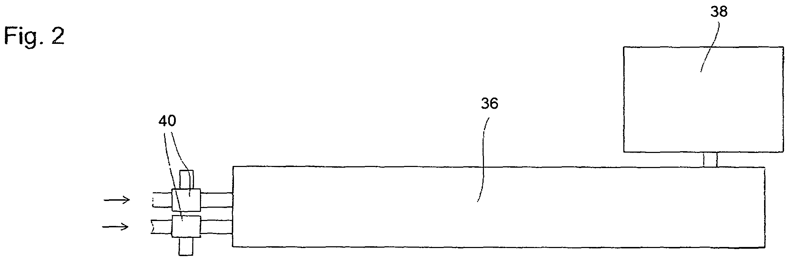

Figur 1 und Figur 2 zeigen als ein erstes Ausführungsbeispiel der Erfindung, welche ein Vakuum oder einen relativen Unterdruckimpuls zur Reifenmontage verwendet, eine Reifenbefüllvorrichtung ohne ein Maschinengestell darzustellen. In Figur 1 ist eine auf eine Grundplatte 34 angelegte Saugglocke 32 erkennbar, und Figur 2 zeigt einen daran anschließbaren Vakuumtank 36, wobei Pfeilpaare in beiden Figuren 1 und 2 die erforderlichen Luftstromverbindungen zwischen den Komponenten der Figuren 1 und 2 andeuten.

Die Saugglocke 32 umschließt einen zu befüllenden Reifen 20 vollständig von oben, nimmt ihn quasi auf. Der Reifen 29 liegt, bereits vorangehend um eine Radfelge 10 herum angeordnet, auf der Grundplatte 34 bereit und bleibt auch auf derselben liegen, während die Saugglocke 32 übergestülpt wird.

Nach einer bevorzugten Variante eines erfindungsgemäßen Befüllverfahrens, in einem Anfangsvorgang der Darstellung in Figur 1 vorangehend, wird vor dem Anlegen der Saugglocke 32 auf die Grundplatte 34 zunächst der Reifen 20 auf der Grundplatte 34 abgelegt und mittels einer durch die Saugglocke 32 hindurch verlegten Füllleitung 2 an ein Reifeninneres 3 angeschlossen, beispielsweise an eine in der Radfelge 10 sitzende Ventilaufnahme 22. Dann wird die Saugglocke 32 dichtend an die Grundplatte 34 angelegt, insbesondere von oben nach unten abgelassen, also aufgesetzt oder mit anderen Worten übergestülpt.

In Figur 2 dargestellte Vakuumschaltventile 40 werden geöffnet, um dem Raum 1 möglichst schlagartig Luft zu entziehen. Dabei heben sich beide Reifenflanken über die jeweilige Felgenschulter und legen sich dichtend an das jeweilige Felgenhorn.

Anschließend oder währenddessen wird mittels der Füllleitung 2 ein geeignetes Gas, bevorzugt Druckluft, in das Reifeninnere 3 geleitet, bis der Reifeninnendruck im Reifeninneren 3 zumindest dem außerhalb der Saugglocke 32 herrschenden Atmosphärendruck entspricht. Während oder nach Erreichen des Atmosphärendruckes oder eines gewünschten Sollreifeninnendruckes wird ein Belüftungsventil 65' geöffnet, bevor oder während die Saugglocke 32 wieder abgehoben wird.

Der in Figur 1 dargestellten Reifenbefüllvorrichtung gemäß dem ersten Ausführungsbeispiel ist in einem neuen automatisierten Montageverfahren gemäß der ein Vakuum zur Reifenmontage verwendenden Erfindung das in Figur 1 exemplarisch dargestellte, aus der Radfelge 10 und dem auf die Radfelge 10 montierten schlauchlosen Reifen 20 bestehende, Rad zuführbar. Dazu ist die dargestellte Reifenbefüllvorrichtung nicht nur in einem nicht dargestellten Maschinengestell aufnehmbar sondern in eine ganze Montagelinie integrierbar. Als ein Reifenfüllhilfsmittel kann die Saugglocke 32 aber auch die Füllleitung 2 angesehen werden. Eine Abdichtung des Raumes 1 hat dann an dem der Grundplatte 34 zugewandten Rand umlaufend zu erfolgen, beispielsweise mittels einer an die Saugglocke angespritzten Dichtlippe und / oder einem in eine umlaufende Nut der Grundplatte 34 eingelassenen Dichtring.

Der Raum 1 ist nach einer vorteilhaften Ausführungsform an ein Unterdrucksystem angeschlossen, wie es in Figur 2 schematisch dargestellt ist. Damit ist der Raum 1 schlagartig weitgehend vakuumierbar. An dieser Stelle wird erläutert, was mit Entlüften / Vakuumieren / Unterdruck-anlegen in dieser Anmeldung gemeint ist. Die Erfindung geht davon aus, dass es überraschenderweise gelingt, die Reifenflanken umlaufend dichtend an die Radfelge 10 anzulegen, wobei beispielsweise jeweils eine Felgenschulter zu überwinden ist, in dem in der Umgebung außerhalb des Reifeninneren 3 schlagartig Luft abgezogen wird, während eine während des Impulsanlegens bis zum Anlegen resultierende Druckminderung im Reifeninneren 3 zuletzt stattfindet. Es entsteht also bereits dadurch schon ein Druckgefälle im jeweiligen Reifenflankenbereich: Innen verbleibt mehr Luft mit höherem Luftdruck als außen, weil im Raum 1 irgendwo von außen her am stärksten ein Sog wirkt, sobald nämlich beispielsweise Vakuumschaltventile 40 geöffnet werden.

Hat ein Vakuumtank 36 beispielsweise ein etwa fünffaches Volumen im Vergleich zum Raum und in dem Vakuumtank ist mittels einer Vakuumpumpe 38 ein Unterdruck von -0,8 bar im Vergleich zum Normaldruck der Atmosphäre eingestellt, gelingt in einer bevorzugten Ausführungsform eines erfindungsgemäßen Befüllverfahrens ein erfolgreiches Anlegen der Reifenflanken an die Felge bei gleichzeitigem Öffnen von zwei Membranventilen zwischen dem Raum 1 und dem Vakuumtank 36.

Gemäß einer vorteilhaften Ausführungsform des Befüllverfahrens ist durch die Füllleitung 2 hindurch ein freies Nachströmen von Umgebungsluft ins Reifeninnere hinein gestattet, oder gar ein Einströmen von Druckluft.Ggf. verläuft das Reifenbefüllverfahren noch betriebssicherer, wenn zunächst nichts ins Reifeninnere nachströmt außer das Unvermeidbare durch den jeweiligen zunächst nicht abgedichteten Ringspalt hindurch, vor allem dem oben frei zugänglichen. Dann könnte es vorteilhaft sein, nämlich die Prozesssicherheit im Zeitraum nach erfolgreichem Flankenschluss steigernd, wenn vor einem Öffnen des Raumes 1 zunächst der Reifen 10 auf Sollinnendruck aufgepumpt wird. Es droht sonst ggf., insbesondere je nach Reifenform, bei zu frühem Öffnen des Raumes 1 ein relativ zu niedriger Reifeninnendruck die Reifenflanken wieder von der Felge abzulösen.

Das Unterdrucksystem ist demnach im dargestellten ersten Ausführungsbeispiel der Figuren 1 und 2 von unten durch die Grundplatte 34 hindurch an den Raum 1 angeschlossen, nämlich mittels dazwischen wirkender Vakuumschaltventile 40. Zusätzlich oder alternativ ist vorgesehen aber nicht dargestellt, dass eine Saugleitung von oben an den Raum 1 angeschlossen ist, beispielsweise durch die dargestellte Saugglocke 32 hindurch, mithin ein ggf. zusätzliches direktes Vakuumieren mittels der Saugglocke 32. Ansonsten ist das Verwenden einer Glocke eine hier aufgezeigte Möglichkeit, um die Erfindung zu Realisieren und es soll keine Beschränkung auf Glocken erfolgt sein, die aktiv saugen. Eine Ausbildung des erfindungsgemäß zu vakuumierenden Raumes als eine Senke, in welche beispielsweise taktweise durch Klappen hindurch der Reifen angedient und gegenüber ausgelassen werden kann, ist zwar nicht dargestellt aber dennoch dem Erfindungsgedanken folgend eine zu schützende Ausführungsform. Dann wäre statt der oben erwähnten Saugglocke bevorzugt ein Deckel dichtend aufsetzbar.

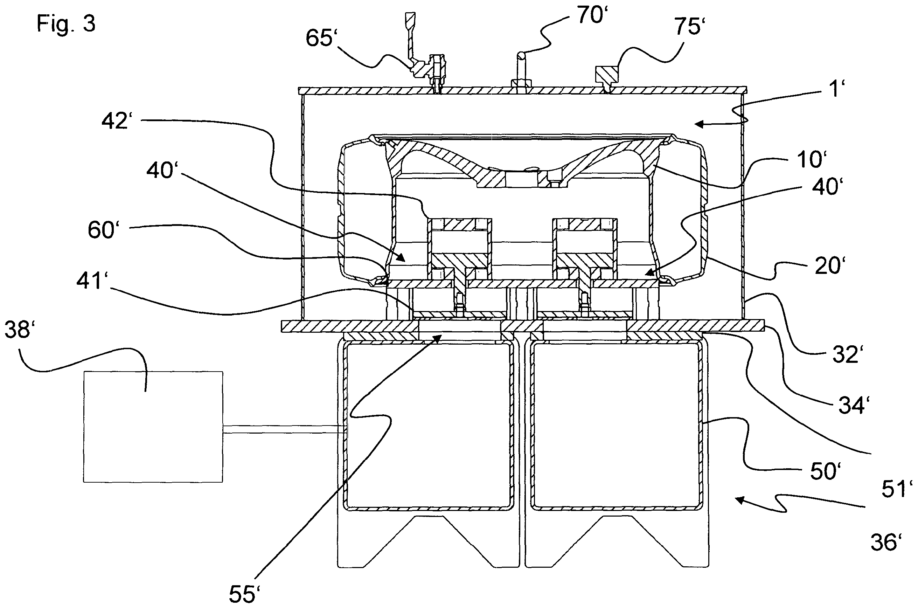

Statt des oben beschriebenen Vakuumtanks 36 oder zusätzlich ist in einer weiteren bevorzugten Ausführungsform eine Vakuumpumpe an den Raum 1 angeschlossen, möglichst direkt, oder der Raum 1 ist als ein Pumpeninnenraum ausgebildet. Dann kann verfahrensmäßig zusätzlich außen ein Unterdruck und innen ein Überdruck angelegt sein, sodass bereits ein Druckgradient als Druckänderung vom Reifeninneren nach außen sich auf die Reifenflanke auswirkt, wenn zusätzlich der Vakuumtank 36, 36' nach Figur 2 oder 3 zum Raum hin geöffnet wird, um gezielt einen zusätzlichen Impuls zu setzen. Dazu ist die Füllleitung 2 dann bevorzugt mit eingesetztem Reifenventil 22 an eine Öffnung der Radfelge 10 angeschlossen.

Der Reifendruck im Reifeninneren 3 kann zur bessern Automatisierung und Erfolgskontrolle online auch als Druckverlaufskurve gemessen werden, um den Prozesserfolg zu bestimmen und/oder zu dokumentieren. Ggf. kann ohne aufwendiges Raumöffnen neu mit schlagartigem Unterdruck reagiert werden, um erst nach Erfolg den nächsten Takt der Montagestraße zuzulassen.

Es erscheint aber an sich schon eine grundsätzliche und ggf. auch von anderen Erfindungsgedanken unabhängige Idee im Gang der Erfindung zu sein, dass die Füllleitung 2 durch die Glocke gelegt ist, um das Reifeninnere 3 unabhängig vom im Raum 1 herrschenden Unterdruck oder Überdruck mit Luft zu versorgen. Es kann durchaus auch für konventionelle Verfahren damit eine Verbesserung der Automatisierbarkeit erreicht sein, die mit Überdruckglocken arbeiten, welche auf den Reifenrand aufgesetzt werden müssen. Das rechtfertigt den weiteren, unabhängigen, ggf. herauszuteilenden Hauptverwendungsanspruch 12 einer durch eine Glocke an einen zu befüllenden Reifen gelegte Druckluftleitung in einem Reifenbefüllverfahren.

Figur 3 zeigt als ein zweites vorteilhaftes Ausführungsbeispiel der Erfindung eine Reifenbefüllvorrichtung ohne Maschinengestell mit auf eine Grundplatte 34' angelegte Saugglocke 32' und einen daran angeschlossenen Vakuumtank 36'. Der Vakuumtank 36' ist im gezeigten Ausführungsbeispiel aus zwei Einzelbehältern 50' gebildet, die unterhalb der Grundplatte 34' angeordnet sind. Die Grundplatte 34' ist hierbei mit Zwischenplatten 51' verbunden. Die Zwischenplatten 51' sind mit den Einzelbehältern 50' verschweißt.

Im zweiten Ausführungsbeispiel gemäß Figur 3 werden die Durchgänge 55' zwischen den beiden Einzelbehältern 50' des Vakuumtanks 36' und dem Raum 1' der Saugglocke 32' über zwei Vakuumschaltventile 40' geöffnet oder geschlossen. Die Vakuumschaltventile 40' sind mittels eines Öffnungsaktors 42' bewegbare Verschlusselemente 41', die abdichtend zum Durchgang 55' positioniert werden können, um zu öffnen oder zu schließen. In der gezeigten Ausführungsform führen Pneumatikzylinder die Aktorenfunktion zum Öffnen und Schließen aus. Die Verschlusselemente 41' sind als Platten ausgebildet.

Zur Aufnahme von Radfelge 10' und Reifen 20' ist die Grundplatte 34' im dargestellten zweiten Ausführungsbeispiel mit einer Konsole 60' ausgestattet, die gleichzeitig auch als Aufnahme für die Öffnungsaktoren 42' dient.

Schematisch dargestellt ist eine Vakuumpumpe 38' zur Erzeugung des Vakuums im Vakuumtank 36'. Denkbar sind auch Ausführungen der erfindungsgemäßen Vorrichtung mit zwei oder mehreren Vakuumpumpen.

Die Mittel zur Erzeugung des Vakuums sind nicht auf herkömmliche Vakuumpumpen beschränkt. Es können alle Mittel erfindungsgemäße Verwendung finden, die Vakuum in einer verfahrenstechnisch geeigneten Form bereitstellen können, um einem Reifenbefüllverfahren zu dienen.

Die Verbindungsleitung zwischen der Vakuumpumpe 38' und dem Vakuumtank 36' ist in Figur 3 nicht in allen Details dargestellt, eine solche Verbindung stellt jedoch einen Bestandteil der erfindungsgemäßen Vorrichtung dar.

Zur Belüftung des Raumes 1' im Inneren der Saugglocke 32' ist die erfindungsgemäße Reifenbefüllvorrichtung mit einem Belüftungsventil 65' ausgestattet. Bei den in Figur 1 und Figur 3 gezeigten vorteilhaften Ausführungsformen ist das Belüftungsventil 65, 65' an der Oberseite der Saugglocke 32, 32' positioniert. Denkbar ist auch die Verwendung mehrerer Belüftungsventile 65, 65', um beispielsweise den Unterdruck in Raum 1 der Saugglocke 32 schneller abbauen zu können.

Weitere Ausstattungsmerkmale der in Figur 3 gezeigten vorteilhaften Ausführungsform der erfindungsgemäßen Reifenbefüllvorrichtung sind eine als Ringmutter ausgebildete Aufnahme 70' zur Verbindung mit einer Handhabevorrichtung und eine Unterdruckmesseinrichtung 75' zur Ermittlung und Anzeige des Unterdruckes in Raum 1. Die Aufnahme 70' dient als Befestigungspunkt für nicht dargestellte technische Vorrichtungen zur Handhabung wie beispielsweise Heben oder Senken der Saugglocke 32' in einem ganz oder teilweise automatisierten Prozess. Denkbar sind auch Ausführungsformen der Saugglocke 32' mit mehr als einer Aufnahme 70'. Die Unterdruckmesseinrichtung 75' kann entweder als einfaches Anzeigeinstrument ausgeführt sein, oder auch, zur Realisierung eines vollautomatisierten Prozessablaufes zur Erfassung, Anzeige, Weitergabe und / oder Speicherung des herrschenden Unterdruckes in Raum 1' geeignet sein.

Die in Figur 1 eingezeichnete Füllleitung 2, in Figur 3 nicht sichtbar dargestellt, ist dennoch als ein aber auch nicht notwendiger Bestandteil der in Figur 3 gezeigten vorteilhaften Ausführungsform der erfindungsgemäßen Reifenbefüllvorrichtung anzusehen.

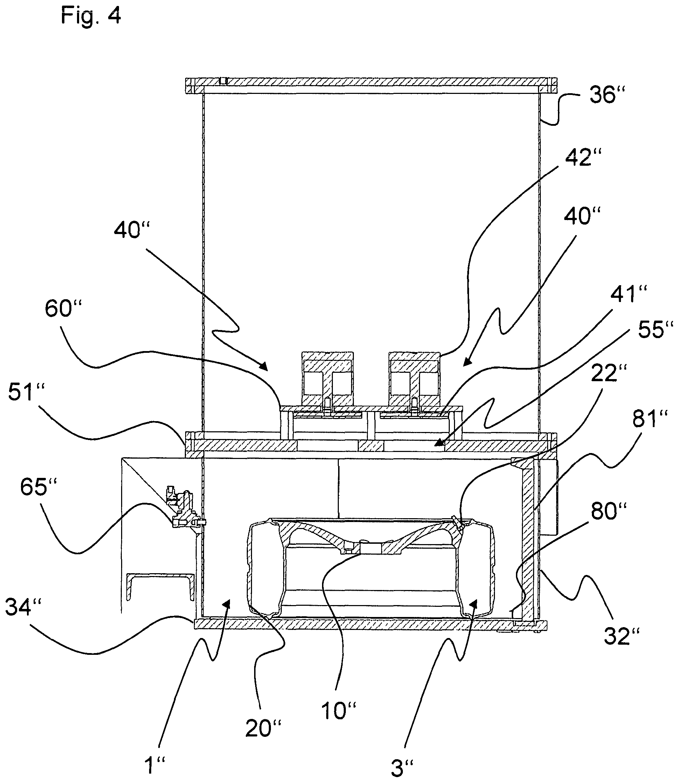

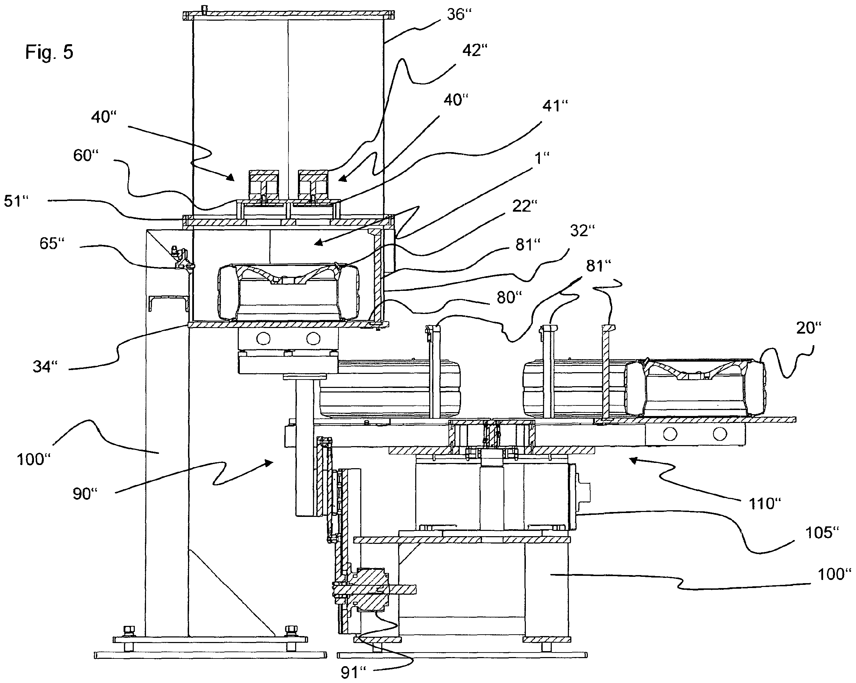

Die Figuren 4 und 5 zeigen ein drittes Ausführungsbeispiel der Erfindung, zunächst in Figur 4 eine Reifenbefüllvorrichtung ohne Maschinengestell 100" mit einer auf einer Grundplatte 34" angeordneten Saugglocke 32" und einen daran angeschlossenen Vakuumtank 36". Der Vakuumtank 36" ist im gezeigten Ausführungsbeispiel oberhalb der als unbewegliches Element ausgebildeten Saugglocke 32" angeordnet. Der Vakuumtank 36" ist hierbei über eine Zwischenplatte 51" mit der Saugglocke 32" verbunden.

Im dritten Ausführungsbeispiel sind die Saugglocke 32" und der Vakuumtank 36''' fest mit einem erst in Figur 5 gezeigten Maschinengestell 100" verbunden. Die Grundplatte 34" ist über eine in Figur 5 näher dargestellte Vorrichtung bewegbar. Die Grundplatte 34" ist dichtend von unten an die Saugglocke 32" anlegbar. Dazu kann die Vorrichtung die als nächstes an die Saugglocke 32" anzulegende Grundplatte 34" zunächst horizontal in die koaxiale Ausrichtung unter der Saugglocke 32" zu bewegen, vorliegend per Drehung. Dann hebt eine Hubvorrichtung der Vorrichtung die Grundplatte 34" bis zum kreisrunden, dichtenden Kontakt mit der Saugglocke 34" an.

Die Durchgänge 55" zwischen dem Vakuumtank 36" und dem Raum 1" der Saugglocke 32" können über zwei innerhalb des Vakuumtanks 36" auf einer Konsole 60" angeordneten Vakuumschaltventile 40" geöffnet oder geschlossen werden. Die Vakuumschaltventile 40" bestehen aus mittels Öffnungsaktoren 42" bewegbaren Verschlusselementen 41", die abdichtend zum Durchgang 55" positioniert werden können, um zu öffnen oder zu schließen. In der gezeigten Ausführungsform führen Pneumatikzylinder die Aktorenfunktion aus. Die Verschlusselemente 41" sind als Platten ausgeführt.

Ein seitlich an der Saugglocke 32" angebrachtes Belüftungsventil 65" dient zum Belüften von Raum 1" innerhalb der Saugglocke 32".

Weitere Ausstattungsmerkmale des in den Figuren 4 und 5 gezeigten Ausführungsbeispiels der erfindungsgemäßen Reifenbefüllvorrichtung sind ein Befüllschlauchanschluss 80" und ein Befüllschlauchständer 81", die als Hilfsteile der Füllleitung 2" an der Grundplatte 34" angebracht sind.

Figur 5 zeigt eine Schnittansicht der erfindungsgemäßen Reifenbefüllvorrichtung nach dem dritten Ausführungsbeispiel mit dem Maschinengestell 100" und Komponenten einer Zuführeinrichtung. An dem Maschinengestell 100" sind die Saugglocke 32" und der Vakuumtank 36" fest angebaut. Die Grundplatten 34", mit darauf abgelegten Reifen 20" und Radfelgen 10" dargestellt, sind bewegbar ausgeführt und werden in der gezeigten vorteilhaften Ausführungsform mittels eines Aktors-Hub 91" und einer Wirkverbindung-Hub 90" vertikal oder zumindest weitgehend vertikal zur Saugglocke 32" hin bzw. von der Saugglocke 32" weg verfahren. In der dargestellten vorteilhaften Ausführungsform wird die Wirkverbindung-Hub 90'' durch einen Ausleger gebildet, der eine Grundplatte 34" aufnimmt. und die Wirkverbindung-Hub 90" ist mittels Linearführungen und eines als Elektromotor ausgeführten Aktors-Hub 90' bewegbar ausgeführt

Figur 5 zeigt weiterhin eine Zuführeinrichtung um Räder, bestehend aus Radfelgen 10" und Reifen 20", der Befüllvorrichtung zuzuführen und befüllte Räder von der Befüllvorrichtung abzutransportieren. Sichtbare Komponenten der Zuführeinrichtung sind ein Maschinengestell 100'', ein Aktor-Zuführung 105'' und eine Wirkverbindung-Zuführung 110''. Der Aktor-Zuführung 105'' wird durch einen motorisch angetriebenen Drehtisch gebildet, der die darauf montierte Wirkverbindung-Zuführung 110" in einer getakteten horizontalen Kreisbahn bewegt. Die Wirkverbindung-Zuführung 110" ist ein Rundtakttisch mit mehreren vertikal bewegbaren Grundplatten 34". Der Aktor-Zuführung 105" und die Wirkverbindung-Zuführung 110" dienen der Wirkverbindung-Hub 90" die Grundplatten 34" mit den darauf abgelegten Rädern an. Der Aktor-Hub 91" positioniert über die Wirkverbindung-Hub 90" die angediente Grundplatte 34" abdichtend an der Saugglocke 32" zur Durchführung des Befüllvorganges.

Nach der Durchführung des Befüllvorganges wird die betreffende Grundplatte 34" mit dem darauf abgelegten Rad vom Aktor-Hub 91" über die Wirkverbindung-Hub 90" wieder zur Wirkverbindung-Zuführung 110" zurückgeführt, die daraufhin über den Aktor-Zuführung 105" um eine Position weitergetaktet wird und so die nächste Grundplatte 34" mit darauf abgelegtem Rad der Wirkverbindung-Hub 90" andient.

### Bezugszeichenliste

- 1, 1', 1": Raum
- 2: Füllleitung
- 3, 3': Reifeninneres
- 10, 10', 10": Radfelge
- 20, 20', 20": Reifen
- 22, 22": Reifenventil
- 32, 32', 32": Saugglocke
- 34, 34', 34": Grundplatte
- 36, 36', 36": Vakuumtank
- 38, 38': Vakuumpumpe
- 40: Vakuumschaltventil
- 41', 41": Verschlusselement
- 42', 42": Öffnungsaktor
- 50': Einzelbehälter
- 51', 51": Zwischenplatte
- 55', 55": Durchgang
- 60', 60": Konsole
- 65, 65', 65": Belüftungsventil
- 70': Aufnahme
- 75': Unterdruckmesseinrichtung
- 80'': Befüllschlauchanschluss
- 81'': Befüllschlauchständer
- 90'': Wirkverbindung-Hub
- 91'': Aktor-Hub
- 100'': Maschinengestell
- 105'': Aktor-Zuführung
- 110'': Wirkverbindung-Zuführung

## Patentansprüche

1. Reifenbefüllvorrichtung, der ein aus einer Radfelge (10, 10', 10") und einem auf die Radfelge (10, 10', 10") montierten schlauchlosen Reifen (20, 20', 20") bestehendes Rad zuführbar ist, mit einem Maschinengestell, einem Reifenfüllhilfsmittel und mit einer Dichtung zur Abdichtung eines zumindest außerhalb des Reifens (20, 20', 20") gebildeten Raums (1, 1', 1"), welcher Raum (1, 1', 1") vakuumierbar ist, **dadurch gekennzeichnet, dass** der Raum (1, 1', 1") außerhalb eines Reifeninneren (3, 3', 3'') um den Reifen (20, 20', 20") herum mittels einer auf einer Grundplatte (34, 34', 34") angelegten Saugglocke (32, 32', 32") ausgebildet ist und dass der Raum (1, 1', 1") mittels zumindest eines Öffnungsaktors (42") schlagartig zumindest weitgehend entlüftbar ist.

2. Reifenbefüllvorrichtung nach Anspruch 1,
**dadurch gekennzeichnet, dass** das Reifenbefüllhilsmittel die Saugglocke (32, 32', 32") ist, die um den Reifen (20, 20', 20") herum dichtend auf der Grundplatte (34, 34', 34") anlegbar ist, welche Grundplatte (34, 34', 34") den Reifen (20, 20', 20") und/oder die Radfelge (10, 10', 10") lagert.

3. Reifenbefüllvorrichtung nach einem der Ansprüche 1 oder 2,
**dadurch gekennzeichnet, dass** das Unterdrucksystem von unten, insbesondere durch die Grundplatte (34, 34', 34") hindurch, an den Raum (1, 1', 1") angeschlossen ist.

4. Reifenbefüllvorrichtung nach einem der Ansprüche 1 bis 3,
**dadurch gekennzeichnet, dass** das Unterdrucksystem, bevorzugt mit dazwischen wirkenden Vakuumschaltventilen (40), von oben an den Raum (1) angeschlossen ist, insbesondere durch die Saugglocke (32) hindurch, also insbesondere mittels der Saugglocke (32) der Unterdruck anlegbar ist.

5. Reifenbefüllvorrichtung nach einem der vorangehenden Ansprüche,
**dadurch gekennzeichnet, dass** das Unterdrucksystem ein Vakuumtank ist oder zumindest einen Vakuumtank (36, 36', 36") und/oder eine Vakuumpumpe (38, 38') aufweist.

6. Reifenbefüllvorrichtung nach einem der vorangehenden Ansprüche,
**dadurch gekennzeichnet, dass** das Reifenbefüllhilfsmittel eine an eine Öffnung der Radfelge (10), insbesondere an ein Reifenventil (22), angeschlossene Füllleitung (2) ist.

7. Reifenbefüllvorrichtung nach Anspruch 1 oder 2 und 6,
**dadurch gekennzeichnet, dass** die Füllleitung (2) durch die Saugglocke (32) gelegt ist, um das Reifeninnere (3) unabhängig von dem im Raum (1) herrschenden Unterdruck mit Luft zu versorgen, insbesondere mit Druckluft.

8. Reifenbefüllverfahren zur Befüllung eines um eine Radfelge (10, 10', 10") herum angeordneten Reifens (20, 20', 20") mittels einer Vorrichtung nach einem der Ansprüche 1 bis 7,
**dadurch gekennzeichnet, dass** ein den Reifen (20, 20', 20") aufnehmender, durch eine Saugglocke (32, 32,', 32") gebildeter Raum (1, 1', 1") zumindest weitgehend entlüftet wird, nämlich dass
der Raum (1, 1', 1") mittels zumindest eines Öffnungsaktors (42', 42") schlagartig zumindest weitgehend entlüftet wird.

9. Reifenbefüllverfahren nach Anspruch 8,
**dadurch gekennzeichnet, dass** zumindest der Raum (1, 1', 1") außerhalb des Reifens (20, 20', 20") mittels einer Reifenbefüllvorrichtung nach einem der Patentansprüche 1 bis 7 zumindest weitgehend entlüftet wird.

10. Reifenbefüllverfahren nach einem der Ansprüche 8 oder 9,
**dadurch gekennzeichnet, dass** eine durch eine Saugglocke (32, 32', 32") hindurch gelegte Füllleitung (2) durch einen Raum (1, 1', 1") hindurch ein Reifeninneres (3, 3', 3") mit Luft versorgt.

11. Reifenbefüllverfahren nach einem der Ansprüche 8 bis 10,
**dadurch gekennzeichnet, dass** es vollautomatisiert stattfindet, mit einem getaktet andienenden Zwischenpuffer, insbesondere mit einem Drehteller und insbesondere mit sternförmig angeordneten Grundplatten (34") und mit insbesondere einem Befüllschlauchständer (81") je Grundplatte (34").

12. Verwendung von schlagartig von außen auf den Reifen (20, 20', 20', 20") wirkendem Unterdruck beim automatisierten Reifenmontieren mit einer Vorrichtung nach einem der Ansprüche 1 bis 7 oder einem Verfahren nach einem der Ansprüche 8 bis 11, womit ein Sog auf die an die Radfelge (10, 10', 10") anzulegenden Reifenflanken wirkt.

13. Verwendung nach Anspruch 12,
**dadurch gekennzeichnet, dass** das Reifenmontieren mit Unterdruck und ein Reifenbefüllen mit Druckluft ineinander übergehend erfolgen, indem eine an ein Reifenventil (22) des zu montierenden und zu befüllenden Reifens (20) angeschlossene Füllleitung (2) durch einen zumindest teilvakuumierten Raum (1, 1', 1") hindurch den Reifen (20, 20', 20") füllt, bevor nach dem erfolgreichen Reifenmontieren der außen um den Reifen (20, 20', 20") herum bis zuletzt anliegende Unterdruck auf Umgebungsdruck verändert wird.

14. Verwendung nach Anspruch 12 oder 13,
**dadurch gekennzeichnet, dass** schlagartig entlüftet wird, während oder bevor ein geeignetes Gas in ein Reifeninneres (3, 3', 3") geleitet wird.

## Claims

1. A tyre-filling device that can be supplied with a wheel comprising a wheel rim (10, 10', 10") and a tubeless tyre (20, 20', 20") mounted on the wheel rim (10, 10', 10"), with a machine frame, a tyre-filling aid and with a seal for sealing a space (1, 1', 1") formed at least outside of the tyre (20, 20', 20"), wherein this space (1, 1', 1") can be evacuated,
**characterised in that** the space (1, 1', 1") is formed outside of a tyre inside (3, 3', 3") around the tyre (20, 20', 20") by way of a suction bell (32, 32', 32") applied to a base plate (34, 34', 34") and that the space (1, 1', 1") can be abruptly at least mostly evacuated by way of at least one opening actuator (42").

2. The tyre-filling device in accordance with claim 1,
**characterised in that** the tyre-filling aid is the suction bell (32, 32', 32") that can be applied to a base plate (34, 34', 34") sealing around the tyre (20, 20', 20"), wherein the base plate (34, 34', 34") supports the tyre (20, 20', 20") and/or the wheel rim (10, 10', 10").

3. The tyre-filling device in accordance with one of claims 1 or 2,
**characterised in that** the vacuum system is connected to the space (1, 1', 1") from below, in particular through the base plate (34, 34', 34").

4. The tyre-filling device in accordance with one of claims 1 to 3,
**characterised in that** the vacuum system, preferably with vacuum switching valves (40) acting in between, is connected to the space (1) from above, in particular through the suction bell (32), i.e. that the vacuum can be applied in particular by way of the suction bell (32).

5. The tyre-filling device in accordance with one of the preceding claims,
**characterised in that** the vacuum system is a vacuum tank or has at least one vacuum tank (36, 36', 36") and/or one vacuum pump (38, 38').

6. The tyre-filling device in accordance with one of the preceding claims,
**characterised in that** the tyre-filling aid is a filling line (2) connected to an opening of the wheel rim (10), in particular to a tyre valve (22).

7. The tyre-filling device in accordance with claims 1 or 2 and 6,
**characterised in that** the filling line (2) is routed through the suction bell (32) in order to supply the tyre inside (3) with air, in particular with compressed air, independently of the vacuum in the space (1).

8. A tyre-filling method for filling a tyre (20, 20', 20") placed around a wheel rim (10, 10', 10") by way of a device in accordance with one of claims 1 to 7, **characterised in that** a space (1, 1', 1") taking up the tyre (20, 20', 20") and formed by a suction bell (32, 32,', 32") is at least mostly vented, specifically that the space (1, 1', 1") is abruptly at least mostly vented by way of at least one opening actuator (42', 42").

9. The tyre-filling method in accordance with claim 8, **characterised in that** at least the space (1, 1', 1") outside of the tyre (20, 20', 20") is at least mostly vented by way of a tyre-filling device in accordance with one of patent claims 1 to 7.

10. The tyre-filling method in accordance with one of claims 8 or 9,
**characterised in that** a filling line (2) routed through a suction bell (32, 32', 32") supplies a tyre inside (3, 3', 3") with air through a space (1, 1', 1").

11. The tyre-filling method in accordance with one of claims 8 to 10, **characterised in** it taking place fully automated with an interim buffer supplying in a timed manner, in particular with a turntable and in particular with base plates (34") arranged in a star shape and with in particular one filling-hose stand (81") per base plate (34") .

12. Use of vacuum abruptly acting on the tyre (20, 20', 20', 20") from the outside during automated tyre mounting with a device in accordance with one of claims 1 to 7 or a method in accordance with one of claims 8 to 11, wherein a suction acts on the tyre flanks to be applied to the wheel rim (10, 10', 10").

13. Use in accordance with claim 12,
**characterised in that** the tyre mounting with vacuum and a tyre filling with compressed air take place merging into each other, by way of a filling line (2) connected to a tyre valve (22) of the tyre (20) to be mounted and filled filling the tyre (20, 20', 20") through an at least partially evacuated space (1, 1', 1") before the vacuum pending around the tyre (20, 20', 20") until the end is changed to ambient pressure after successful tyre mounting.

14. Use in accordance with claim 12 or 13,
**characterised in** abrupt venting during or before a suitable gas is fed into a tyre inside (3, 3', 3").

## Revendications

1. Dispositif de gonflage de pneumatiques auquel une roue constituée d'une jante de roue (10, 10', 10'') et d'un pneu sans chambre à air (20, 20', 20'') monté sur la jante de la roue (10, 10', 10'') peut être alimentée, avec un châssis de machine, par une aide au gonflage de pneumatiques et avec un joint pour obturer un espace (1, 1', 1'') formé au moins à l'extérieur du pneu (20, 20', 20''), lequel espace (1, 1', 1'') peut être mis sous vide,
**caractérisé en ce que**
l'espace (1, 1', 1'') à l'extérieur de l'intérieur d'un pneu (3, 3', 3'') autour du pneu (20, 20', 20' ') est formé d'une ventouse (32, 32', 32'') placée sur une plaque de base (34, 34', 34'') et que l'espace (1, 1', 1'') peut être au moins largement ventilé par au moins un actionneur d'ouverture (42'').

2. Dispositif de gonflage de pneumatiques selon la revendication 1,
**caractérisé en ce que** l'aide au gonflage du pneu est la ventouse (32, 32', 32"), qui peut être placée autour du pneu (20, 20', 20'') de manière étanche sur une plaque de base (34, 34', 34''), la plaque de base (34, 34', 34'') supportant le pneumatique (20, 20', 20'') et/ou la jante de roue (10, 10', 10'').

3. Dispositif de gonflage de pneumatiques selon la revendication 1 ou 2,
**caractérisé en ce que** le système de vide est relié par le bas, en particulier par la plaque de base (34, 34', 34''), à la pièce (1, 1', 1'').

4. Dispositif de gonflage de pneumatiques selon une des revendications 1 à 3,
**caractérisé en ce que** le système de vide, de préférence avec des soupapes de commutation à vide (40) agissant entre elles, est relié à la pièce (1) par le dessus, notamment par l'intermédiaire de la ventouse (32), c'est-à-dire que le vide peut être appliqué par la ventouse (32).

5. Dispositif de gonflage de pneumatiques selon l'une des revendications précédentes,
**caractérisé en ce que** le système de vide est un réservoir à vide ou au moins a un réservoir à vide (36, 36', 36'') et/ou une pompe à vide (38, 38').

6. Dispositif de gonflage de pneumatiques selon l'une des revendications précédentes,
**caractérisé en ce que** l'aide au gonflage de pneumatiques est une conduite de remplissage (2) reliée à une ouverture de la jante de roue (10), en particulier à une valve de pneu (22).

7. Dispositif de gonflage de pneumatiques selon la revendication 1 ou 2 et 6,
**caractérisé en ce que** la conduite de remplissage (2) est posée à travers la ventouse (32) pour alimenter l'intérieur du pneumatique (3) en air, notamment en air comprimé, indépendamment du vide dominant l'espace (1).

8. Procédé de gonflage d'un pneumatique pour le gonflage d'un pneumatique (20, 20, 20, 20') autour d'une jante de roue (10, 10', 10') au moyen d'un dispositif selon l'une des revendications 1 à 7,
**caractérisé en ce qu'**un espace (1, 1', 1") logeant le pneumatique (20, 20', 20") constitué par une ventouse (32, 32,', 32") est au moins largement ventilé, à savoir que cet espace (1, 1', 1") est soudainement au moins largement ventilé par au moins un actionneur d'ouverture (42', 42'').

9. Procédé de gonflage de pneumatiques selon la revendication 8,
**caractérisé en ce que** l'espace (1, 1', 1'') à l'extérieur du pneumatique (20, 20', 20'') est au moins largement ventilé au moyen d'un dispositif de gonflage de pneumatique selon l'une des revendications 1 à 7.

10. Procédé de gonflage de pneumatiques selon la revendication 8 ou 9,
**caractérisé en ce qu'**une conduite de remplissage (2) placée à travers une ventouse (32, 32', 32'') alimente l'intérieur d'un pneu (3, 3', 3") en air à travers un espace (1, 1 ', 1'').

11. Procédé de gonflage de pneumatiques selon les revendications 8 à 10, **caractérisé en ce qu'**il s'effectue de manière entièrement automatique, avec un tampon intermédiaire cadencé, notamment avec un plateau tournant et en particulier avec des embases en étoile (34'') et avec notamment un support de tuyau de remplissage (81'') par embase (34'').

12. Utilisation d'un vide soudain agissant de l'extérieur sur les pneus (20, 20', 20', 20") lors du montage automatisé des pneus avec un dispositif conforme à l'une des revendications 1 à 7 ou un procédé conforme à l'une des revendications 8 à 11, avec lequel une aspiration agit sur les flancs du pneumatique à appliquer sur la jante de roue (10, 10', 10'').

13. Utilisation selon la revendication 12,
**caractérisée en ce que** le montage du pneu à vide et son gonflage avec de l'air comprimé ont lieu l'un dans l'autre par une conduite de remplissage (2) reliée à une valve du pneu (22) devant être monté et gonflé (20) par un espace au moins partiellement sous vide (1, 1', 1") remplissant le pneu (20, 20', 20") avant que, après le montage du pneu réussi, la pression négative autour de l'extérieur du pneu (20, 20', 20") ne soit finalement ramenée à température ambiante.

14. Utilisation selon la revendication 12 ou 13,
**caractérisée en ce que** la ventilation soudaine s'effectue pendant ou avant l'introduction d'un gaz approprié à l'intérieur d'un pneu (3, 3', 3").
